# EUROPÄISCHE PATENTSCHRIFT

(11) **EP 2 464 992 B1**
(45) Veröffentlichungstag und Bekanntmachung des Hinweises auf die Patenterteilung: **21.10.2015**
(21) Anmeldenummer: 10734495.4
(22) Anmeldetag: 23.07.2010
(51) Int. Cl.: G01S 15/93, G08G 1/16, B60W 50/08, G01S 13/93, B60W 50/14

(54) **KOLLISIONSÜBERWACHUNG FÜR EIN KRAFTFAHRZEUG**
COLLISION MONITORING FOR VEHICLE
COLLISION SURPERVISION POUR VÉHICULE

(30) Priorität: 11.08.2009 DE 102009028451
(43) Veröffentlichungstag der Anmeldung: 20.06.2012
(73) Patentinhaber: Robert Bosch GmbH, 70442 Stuttgart (DE)
(72) Erfinder: ZELLER, Joerg, 70180 Stuttgart (DE); LATSCH, Nico, 71570 Oppenweiler (DE); SCHLIEMANN, Mike, 71701 Schwieberdingen (DE); KLOSS, Florian, 70499 Stuttgart (DE)
(86) Internationale Anmeldenummer: PCT/EP2010/060688
(87) Internationale Veröffentlichungsnummer: WO 2011/018321

(56) Entgegenhaltungen:
- EP-A2- 2 020 341
- DE-A1- 19 654 538
- US-A- 4 779 095
- US-A1- 2005 073 433
- US-A1- 2007 024 431

## Beschreibung

### Technisches Gebiet

Die vorliegende Erfindung betrifft ein Verfahren und eine Vorrichtung zur Kollisionsüberwachung für Kraftfahrzeuge, wobei ein Umgebungsbereich des Kraftfahrzeugs mit Hilfe von Objektsensoren überwacht wird.

### Stand der Technik

Aus der Offenlegungsschrift DE 10 2006 002 232 A1 sind ein Verfahren und eine Vorrichtung zur Kollisionsüberwachung bei einem Kraftfahrzeug bekannt, wobei bei jedem Stillstand des Kraftfahrzeugs zunächst eine Positionsangabe im Umgebungsbereich befindlicher Objekte als ein Referenzzustand erzeugt wird. In regelmäßigen Zeitabständen oder bei bestimmten Ereignissen, wie beispielsweise bei einem Anfahrwunsch des Fahrers, werden weitere Positionsangaben als Ist-Zustände bestimmt. Wenn durch einen Vergleich des jeweiligen Ist-Zustands mit dem Referenzzustand erkannt wird, dass sich wenigstens ein Objekt an das Kraftfahrzeug angenähert hat, wird eine mögliche Kollision erkannt und ein Warnsignal an den Fahrer ausgegeben.

Bei diesem bekannten Verfahren wird der Fahrer also vor einer möglichen Kollision mit jedem Objekt gewarnt, das sich im Umgebungsbereich befindet und festgestellt durch Vergleichen mit dem Referenzzustand an das Kraftfahrzeug annähert. Somit können auch geöffnete Türen des Kraftfahrzeugs, Anhänger oder dergleichen Kollisionswarnungen erzeugen, obwohl von diesen Objekten keinerlei Kollisionsgefahr ausgeht.

Weiterhin wird bei dem aus der DE 10 2006 002 232 A1 bekannten Verfahren auch vor Objekten gewarnt, die sich zwar im Umgebungsbereich des Kraftfahrzeugs befinden und sich an das Kraftfahrzeug annähern, die jedoch nicht in Fahrtrichtung des Kraftfahrzeugs liegen und von denen somit ebenfalls keinerlei Kollisionsgefahr ausgeht, da sich das Kraftfahrzeug in der vom Fahrer gewünschten Fahrtrichtung von diesen Objekten weg bewegen wird.

Zusammengefasst weist das bekannte Verfahren also den Nachteil auf, dass auch bei Objekten, von denen keinerlei Kollisionsgefahr ausgeht, unnötige Warnsignale erzeugt werden können.

Aus der US 2005/0073433 A1 ist ein Verfahren zur Kollisionsüberwachung für ein Kraftfahrzeug bekannt, wobei die Abmessungen des Kraftfahrzeugs, wie z.B. die Höhe, bei der Ermittlung einer Kollisionsgefahr berücksichtigt wird. Weiterhin werden die Größe, Geschwindigkeit und Fortbewegungsrichtung von erkannten Objekten ermittelt.

Es ist daher Aufgabe der vorliegenden Erfindung, ein verbessertes Verfahren und eine verbesserte Vorrichtung zur Kollisionsüberwachung für ein Kraftfahrzeug zur Verfügung zu stellen, bei denen unnötige Warnsignale an den Fahrer vermieden werden können.

### Offenbarung der Erfindung

Diese Aufgabe wird durch das Verfahren gemäß Anspruch 1, durch die Vorrichtung gemäß Anspruch 10 und durch das Computerprogramm gemäß Anspruch 11 gelöst.

Weitere bevorzugte Ausgestaltungen der Erfindung sind in den abhängigen Ansprüchen angegeben.

Gemäß einem ersten Aspekt ist ein Verfahren zur Kollisionsüberwachung für ein Kraftfahrzeug vorgesehen, wobei ein vorgegebener Umgebungsbereich überwacht wird. Das Verfahren umfasst die Schritte:
- Bereitstellen einer Positions- und Bewegungsrichtungsangabe mindestens eines im Umgebungsbereich befindlichen Objekts; dann
- Bereitstellen einer Fahrzeuginformation, welche mindestens eine Position einer Fahrzeugkomponente angibt; dann
- Kennzeichnen eines Objekts, falls aufgrund der Fahrzeuginformation ermittelt wird, dass von dem Objekt keine Kollisionsgefahr für das Kraftfahrzeug ausgeht; und dann
- Signalisieren einer Kollisionsgefahr, wenn aufgrund der Positions- und Bewegungsrichtungsangabe die Annäherung eines nicht gekennzeichneten Objekts an das Kraftfahrzeug erkannt wird.

Bei dem erfindungsgemäßen Verfahren kann somit sichergestellt werden, dass vor Objekten, von denen keine Kollisionsgefahr ausgeht, nicht unnötig gewarnt wird. Beispielsweise geht von einer sich schließenden Fahrzeugtür keine Kollisionsgefahr für das Kraftfahrzeug aus, obwohl sie sich an das Kraftfahrzeug annähert und somit bei einem herkömmlichen Verfahren eine Kollisionswarnung erzeugen würde. Bei dem erfindungsgemäßen Verfahren wird die Fahrzeugtür jedoch als Fahrzeugkomponente gekennzeichnet und erzeugt keine Kollisionswarnung.

Weiterhin wird ein Fahrtrichtungswunsch des Fahrers dahingehend ausgewertet, dass nicht vor Objekten gewarnt wird, mit denen das Kraftfahrzeug aufgrund der aktuellen oder gewünschten Fahrtrichtung nicht kollidieren wird, selbst wenn sich diese Objekte an das Kraftfahrzeug annähern sollten.

Hierbei kann eine Kollisionsgefahr dann signalisiert werden, wenn ein nicht gekennzeichnetes Objekt aufgrund seiner Position und seiner Bewegungsrichtung relativ zu dem Kraftfahrzeug mit dem Kraftfahrzeug kollidieren würde.

Zusätzlich kann bei der Signalisierung einer Kollisionsgefahr auch der Abstand des Objekts vom Kraftfahrzeug berücksichtigt werden, so dass beispielsweise nur solche Objekte als kollisionsgefährdend signalisiert werden, welche höchstens einen vorbestimmten Maximalabstand vom Kraftfahrzeug aufweisen.

Weiterhin kann vorgesehen sein, dass eine Kollisionsgefahr nur dann signalisiert wird, wenn das nicht gekennzeichnete Objekt aufgrund seiner Bewegungsgeschwindigkeit relativ zu dem Kraftfahrzeug innerhalb einer vorbestimmten Zeit mit dem Kraftfahrzeug kollidieren würde.

Es kann hierbei vorgesehen sein, dass ein Objekt gekennzeichnet wird, wenn es sich bei dem Objekt um eine Fahrzeugkomponente handelt, welche sich im Umgebungsbereich befindet. Die Fahrzeugkomponente kann hierbei bewegliche Fahrzeugteile, insbesondere Fahrzeugtüren, umfassen.

Alternativ oder zusätzlich kann vorgesehen sein, dass ein Objekt gekennzeichnet wird, wenn aufgrund eines Blinkersignals und/oder eines Lenkradwinkels und/oder eines Gierwinkels und/oder einer Fahrstufenauswahl ein Fahrtrichtungswunsch des Fahrers ermittelt werden kann, und wenn sich das Objekt außerhalb eines Bereichs befindet, der vom Kraftfahrzeug in der gewünschten Fahrtrichtung überfahren wird

Bei einer Ausführungsform des erfindungsgemäßen Verfahrens kann das Bereitstellen der Positions- und Bewegungsrichtungsangabe mindestens eines im Umgebungsbereich befindlichen Objekts während des Stillstands des Kraftfahrzeugs durchgeführt werden. Hierdurch kann eine Kollisionsüberwachung insbesondere beim Anfahren des Kraftfahrzeugs realisiert werden, und es kann insbesondere dann ein eine Kollisionsgefahr signalisiert werden, wenn beispielsweise anhand der Stellung des Brems- und/oder Gaspedals und/oder anhand der Stellung des Antriebsstrangs eines manuellen oder automatischen Getriebes ein Anfahrwunsch des Fahrers erkannt wird.

Bei einer weiteren Ausführungsform des erfindungsgemäßen Verfahrens kann das Bereitstellen der Positions- und Bewegungsrichtungsangabe mindestens eines im Umgebungsbereich befindlichen Objekts während der Fahrt des Kraftfahrzeugs durchgeführt werden und somit auch während der Fahrt des Kraftfahrzeugs eine Kollisionsüberwachung ermöglicht werden.

Bei Erkennen einer möglichen Kollision kann ein Warnsignal an den Fahrer ausgegeben werden, wobei es sich um ein akustisches, optisches und/oder haptisches Warnsignal handeln kann.

Gemäß einem ersten Aspekt ist eine Vorrichtung zur Kollisionsüberwachung für ein Kraftfahrzeug vorgesehen. Die Vorrichtung umfasst:
- wenigstens einen Objektsensor zur Überwachung eines vorgegebenen Umgebungsbereichs;
- eine Steuereinheit, welche ausgebildet ist, um:
   - eine Positions- und Bewegungsrichtungsangabe mindestens eines im Umgebungsbereich befindlichen Objekts bereitzustellen;
   - eine Fahrzeuginformation, welche mindestens eine Position einer Fahrzeugkomponente und/oder einen Fahrtrichtungswunsch des Fahrers angibt, bereitzustellen; und
   - das Objekt zu kennzeichnen, falls aufgrund der Fahrzeuginformation ermittelt wird, dass von dem Objekt keine Kollisionsgefahr für das Kraftfahrzeug ausgeht; und
- eine Signalisierungseinrichtung zum Signalisieren einer Kollisionsgefahr, wenn aufgrund der Positions- und Bewegungsrichtungsangabe die Annäherung eines nicht gekennzeichneten Objekts an das Kraftfahrzeug erkannt wird.

### Kurzbeschreibung der Zeichnungen

Im Folgenden wird eine bevorzugte Ausführungsform der vorliegenden Erfindung beispielhaft anhand der beigefügten Zeichnungen beschrieben. Es zeigen:
- Fig. 1: eine schematische Darstellung eines Kraftfahrzeugs mit einer Vorrichtung zur Kollisionsüberwachung gemäß einer Ausführungsform der vorliegenden Erfindung, und
- Fig. 2: ein Flussdiagramm zur Darstellung eines Verfahrens zur Kollisionsüberwachung gemäß einer Ausführungsform der vorliegenden Erfindung.

### Ausführungsform der Erfindung

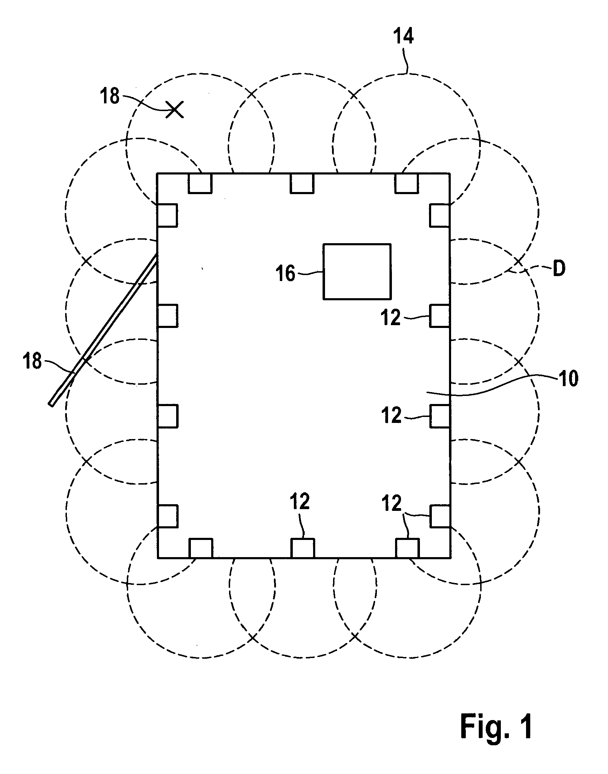

In Fig. 1 ist ein Kraftfahrzeug 10 mit einer Mehrzahl von Objektsensoren 12 schematisch dargestellt. Die Objektsensoren 12 können beispielsweise Ultraschallsensoren, Radarsensoren, Lasersensoren, Infrarotsensoren oder jeden anderen geeigneten Objektsensorentyp umfassen. Jeder Objektsensor 12 hat einen Detektionsbereich D, wie in Fig. 1 mit gestrichelten Linien dargestellt ist. Die einzelnen Detektionsbereiche D der Objektsensoren 12 überlappen sich oder ergänzen sich dabei derart, dass die Summe der Fläche aller Detektionsbereiche D einen Umgebungsbereich 14 des Kraftfahrzeugs 10 definieren.

Die Objektsensoren 12 können die Anwesenheit von Objekten 18 im Umgebungsbereich 14 des Kraftfahrzeugs 10 erfassen und können weiterhin derart ausgebildet sein, dass sie auch den Abstand bzw. die Entfernung zwischen dem jeweiligen Objekt 18 und dem Kraftfahrzeug 10 bestimmen können. Weiterhin kann auch eine Winkellagebestimmung des Objekts 18 relativ zu dem Kraftfahrzeug 10 durch die Objektsensoren 12 durchgeführt werden.

Eine Steuereinheit 16 ist mit den Objektsensoren 12 verbunden und empfängt von diesen eine Positionsinformation der erfassten Objekte, die die Position eines oder mehrerer erfassten Objekte angibt. Aus der Positionsinformation der Objektsensoren 12 ermittelt die Steuereinheit 16 die Position eines von den Objektsensoren 12 erfassten Objekts 18 im Umgebungsbereich 14 des Kraftfahrzeugs 10. Dabei kann die Anwesenheit oder Abwesenheit von Objekten 18 in den einzelnen Detektionsbereichen D der Objektsensoren 12 ermittelt werden, oder es können der Abstand jedes Objekts 18 vom Kraftfahrzeug 10 und deren Richtung bezüglich des Kraftfahrzeugs 10 bestimmt werden. Weiterhin kann in der Steuereinheit 16 anhand der Positionsinformation die Position jedes Objekts 18 in einem geeigneten Koordinatensystem um das Kraftfahrzeug 10 bestimmt werden.

Alternativ oder zusätzlich kann auch die Geschwindigkeit und Bewegungsrichtung des Objekts 18 relativ zu dem Kraftfahrzeug 10 ermittelt werden. Die Bewegungsrichtung kann beispielsweise durch Ermittlung eines Bewegungsvektors aus zu zwei verschiedenen Zeitpunkten erfassten Positionen des betreffenden Objekts bestimmt werden, während der Abstand zwischen den Positionen und der Zeitdauer zwischen den Zeitpunkten die Geschwindigkeit des Objektes angibt. Alternativ kann die relative Geschwindigkeit des Objekts bezüglich des Objektsensors 12 z.B. mit Hilfe des Dopplereffekts in an sich bekannter Weise bestimmt werden.

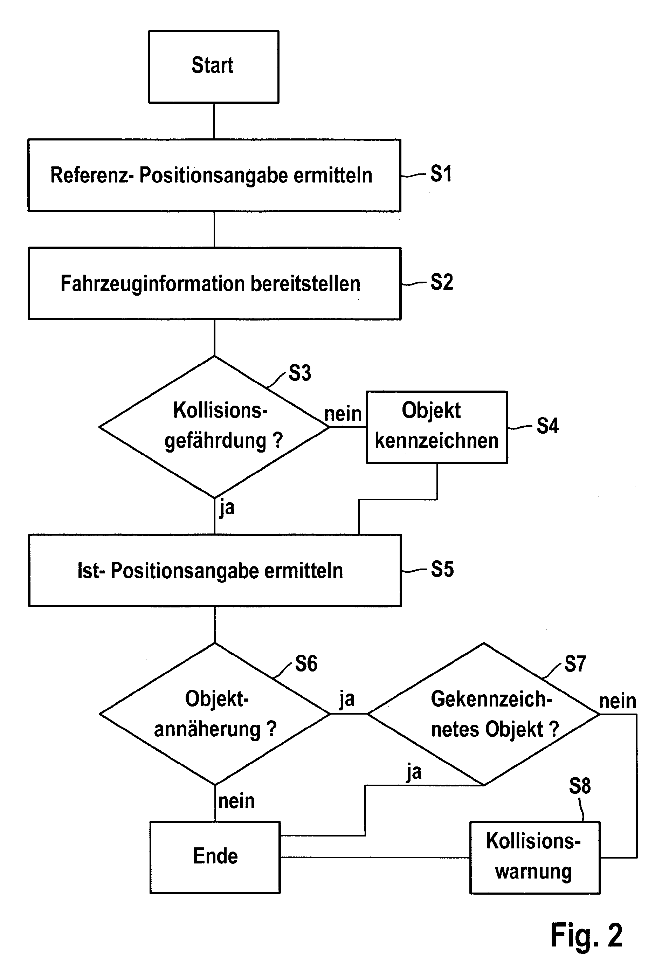

Im Folgenden wird die Funktionsweise der voranstehend beschriebenen Vorrichtung unter Bezugnahme auf das Flussdiagramm der Fig. 2 erläutert. Hierbei wird in der Steuereinheit 16 das nachstehend beschriebene Verfahren durchgeführt.

Zunächst wird in Schritt S1 eine Referenz-Positionsangabe ermittelt. Dazu werden Positionsangaben eines oder mehrerer Objekte 18 im Umgebungsbereich 14 des Kraftfahrzeugs 10 mit Hilfe der Objektsensoren 12 bestimmt. Eine Referenz-Positionsangabe eines Objekts 18 kann hierbei die Anwesenheit eines Objekts in einem Detektionsbereich D eines Objektsensors 12 umfassen und/oder den Abstand des Objekts 18 vom Kraftfahrzeug 10 und/oder die Richtung des Objekts 18 vom Kraftfahrzeug 10.

Sollte sich bei der Ermittlung der Referenz-Positionsangabe kein Objekt 18 im Umgebungsbereich 14 befinden, können statt der Referenz-Positionsangabe eines Objekts einer oder mehrere voreingestellte Abstandswerte verwendet werden. Ein derartiger voreingestellter Abstandswert kann beispielsweise für jeden Detektionsbereich D eines Objektsensors 12 gleich der Länge des jeweiligen Detektionsbereichs D sein.

In Schritt S2 werden Fahrzeuginformationen bereitgestellt. Diese Fahrzeuginformationen können einerseits Positionen von Fahrzeugkomponenten, d.h. Komponenten, die sich am Fahrzeug befinden und von einem oder mehreren der Objektsensoren 12 ganz oder teilweise erfasst werden können, wie z.B. die schematisch in Fig. 1 dargestellte geöffnete Tür, am Kraftfahrzeug 10 angekoppelte Anhänger oder dergleichen, angeben. Alternativ oder zusätzlich können die Fahrzeuginformationen Richtungsinformationen umfassen, wenn aufgrund eines Signals eines Blinkers des Kraftfahrzeugs 10 oder durch Auswertung eines Lenkradwinkels oder eines Gierwinkels oder durch Auswerten einer Fahrstufenauswahl (beispielsweise Einlegen eines Rückwärtsgangs) erkannt wird, dass der Fahrer des Kraftfahrzeugs 10 eine bestimmte Richtung einschlagen möchte.

In Schritt S3 wird mit Hilfe der Fahrzeuginformation für jedes im Umgebungsbereich 14 befindliche Objekt 18 ermittelt, ob von dem Objekt 18 eine Kollisionsgefahr für das Kraftfahrzeug 10 ausgeht. Beispielsweise kann anhand der entsprechenden Fahrzeuginformation ermittelt werden, ob es sich bei dem Objekt 18 um eine Fahrzeugkomponente handelt, indem die Position des Objekts 18 mit den in Schritt S2 ermittelten Positionen von Fahrzeugkomponenten abgeglichen wird.

Weiterhin kann anhand einer in Schritt S2 ermittelten entsprechenden Fahrzeuginformation, die einen Fahrtrichtungswunsch des Fahrers angibt, und anhand einer ebenfalls bereitgestellten Angabe über die Fahrzeuggeschwindigkeit, ein Fahrbereich bestimmt werden, den das Fahrzeug in einem bestimmten (sich an den aktuellen Zeitpunkt anschließenden) Zeitfenster überfährt. Bei einer Geradeausfahrt entspricht der Fahrbereich beispielsweise einem Bereich, der sich an die Vorderseite des Fahrzeugs anschließt und dessen Größe durch die Breite des Fahrzeugs und der Länge bestimmt wird, die sich aus der Fahrzeuggeschwindigkeit und der Dauer des Zeitfensters ergibt. Es kann dann ermittelt werden, ob sich das Objekt 18 in dem Fahrbereich befindet, den das Kraftfahrzeug 10, wenn es sich in der durch die Auswertung des Schritts S2 bestimmten Fahrtrichtung bewegt, überfahren wird.

Falls in Schritt S3 festgestellt wird, dass das Objekt 18 eine Fahrzeugkomponente ist, wird es in Schritt S4 gekennzeichnet. Falls sich das Objekt 18 außerhalb des Fahrbereichs befindet, wird dieses Objekt ebenfalls in Schritt S4 gekennzeichnet. Eine derartige Kennzeichnung kann das Setzen eines Objektflags für das bestimmte Objekt umfassen, wobei das Objekt durch dessen in Schritt S1 bestimmte Position eindeutig definiert ist. Für unterschiedliche Typen von Objekten (wie beispielsweise Fahrzeugkomponenten oder Objekte, die sich nicht in Fahrtrichtung des Kraftfahrzeugs 10 befinden) können unterschiedliche Arten von Objektflags oder unterschiedliche Werte eines Kennzeichnungsparameters vorgesehen sein.

In Schritt S5 wird eine Ist-Positionsangabe der Objekte 18 im Umgebungsbereich 14 ermittelt. Dieser Schritt wird in vorgegebenen Zeitabständen oder bei vorbestimmten Ereignissen durchgeführt, wie beispielsweise wenn anhand der Stellung des Brems- und/oder Gaspedals und/oder anhand der Stellung des Antriebsstrangs eines manuellen oder automatischen Getriebes ein Anfahrwunsch des Fahrers erkannt wird.

Hierbei werden die Positionen im Umgebungsbereich befindlicher Objekte 18 bestimmt. Wie bei der Ermittlung der Referenz-Positionsangabe in Schritt S2, können auch hier Positionsangaben des Objekts 18 in einem geeigneten Koordinatensystem bestimmt werden, oder es können ein Abstandswert und/oder eine Richtungsangabe und/oder eine Relativgeschwindigkeit und/oder eine Bewegungsrichtung des Objekts 18 relativ zu dem Kraftfahrzeug 10 bestimmt werden.

Aus der in Schritt S1 bestimmten Referenz-Positionsangabe und der in Schritt S5 bestimmten Ist-Positionsangabe wird dann für jedes Objekt 18 im Umgebungsbereich 14 eine Positions- und Bewegungsrichtungsangabe ermittelt. Eine Bewegungsrichtung jedes Objekts 18 relativ zu dem Kraftfahrzeug 10 kann hierbei entweder über einen Vergleich der Ist-Positionsangabe mit der Referenz-Positionsangabe erfolgen, oder eine Bewegungsrichtung und Bewegungsgeschwindigkeit jedes Objekts 18 kann beispielsweise mit Hilfe des Dopplereffekts durch die Objektsensoren 12 direkt ermittelt werden.

In Schritt S6 wird durch Auswertung der Positions- und Bewegungsrichtungsangabe für jedes Objekt 18 im Umgebungsbereich 14 bestimmt, ob sich wenigstens ein Objekt 18 an das Kraftfahrzeug 10 angenähert hat. Hierdurch wird sowohl der Fall erfasst, dass sich ein Objekt 18, das sich bereits bei der Ermittlung der Referenz-Positionsangabe im Umgebungsbereich 14 des Kraftfahrzeugs 10 befand, auf das Kraftfahrzeug 10 zu bewegt hat, als auch der Fall, dass ein Objekt 18, das sich bei der Ermittlung der Referenz-Positionsangabe noch nicht im Umgebungsbereich 14 befand, sich in den Umgebungsbereich 14 bewegt hat.

Wenn sich kein Objekt 18 an das Kraftfahrzeug 10 angenähert hat, ist das Verfahren beendet, da keine Kollisionsgefahr erkannt worden ist.

Wenn in Schritt S6 festgestellt wird, dass sich wenigstens ein Objekt 18 an das Kraftfahrzeug 10 angenähert hat, wird in Schritt S7 überprüft, ob es sich dabei um ein gekennzeichnetes Objekt handelt, für das in Schritt S4 ein Objektflag gesetzt worden ist. Wenn anhand des gesetzten Objektflags ersichtlich ist, dass von dem Objekt 18 keine Kollisionsgefahr ausgeht, obwohl es sich an das Kraftfahrzeug 10 angenähert hat, ist das Verfahren beendet, da keine Kollisionsgefahr erkannt worden ist.

Wenn in Schritt S7 festgestellt wird, dass es sich um ein möglicherweise kollisionsgefährdendes Objekt 18 handelt, da dieses Objekt 18 nicht in Schritt S4 gekennzeichnet worden ist, wird eine Kollisionsgefahr erkannt und in Schritt S8 eine Information über eine mögliche Kollision bereitgestellt und/oder ein akustisches und/oder optisches und/oder haptisches Warnsignal an den Fahrer ausgegeben.

Es ist denkbar, dass in Abhängigkeit von unterschiedlichen Fahrsituationen des Kraftfahrzeugs 10 unterschiedliche Warnsignale ausgegeben werden. So kann beispielsweise während des Stillstands des Kraftfahrzeugs 10 ein erstes Warnsignal ausgegeben werden, wenn eine Kollisionsgefahr erkannt wird, und es kann ein zweites Warnsignal ausgegeben werden, wenn zusätzlich noch ein Anfahrwunsch des Fahrers erkannt wird.

Statt einer Referenz-Positionsangabe, die aus dem Abstand eines im Umgebungsbereich 14 befindlichen Objekts 18 von dem Kraftfahrzeug 10 ermittelt wird, kann auch unabhängig von der Anwesenheit und der Position von Objekten 18 im Umgebungsbereich 14 des Kraftfahrzeugs 10 ein fest vorgegebener Referenzabstand als Referenz-Positionsangabe angenommen werden.

In diesem Fall wird in Schritt S6 überprüft, ob ein Objekt 18 zu dem Kraftfahrzeug 10 einen geringeren Abstand als den Referenzabstand aufweist und sich an das Kraftfahrzeug 10 annähert. Falls dies der Fall ist, wird, wie oben beschrieben, in Schritt S7 geprüft, ob es sich bei dem Objekt 18 um ein das Fahrzeug gefährdendes Objekt handelt und gegebenenfalls in Schritt S8 ein Warnsignal ausgegeben.

## Patentansprüche

1. Verfahren zur Kollisionsüberwachung für ein Kraftfahrzeug (10), wobei ein vorgegebener Umgebungsbereich (14) überwacht wird, umfassend:
- Bereitstellen (S1, S5) einer Positions- und Bewegungsrichtungsangabe mindestens eines im Umgebungsbereich (14) befindlichen Objekts (18); dann
- Bereitstellen (S2) einer Fahrzeuginformation, die mindestens eine Position einer Fahrzeugkomponente angibt; dann
- Kennzeichnen (S4) eines Objekts (18), falls mit Hilfe der Fahrzeuginformation ermittelt wird, dass es sich bei dem Objekt (18) um eine Fahrzeugkomponente handelt, welche sich im Umgebungsbereich (14) befindet; und dann
- Signalisieren (S8) einer Kollisionsgefahr, wenn aufgrund der Positions- und Bewegungsrichtungsangabe die Annäherung eines nicht gekennzeichneten Objekts (18) an das Kraftfahrzeug (10) erkannt wird.

2. Verfahren nach Anspruch 1, **dadurch gekennzeichnet, dass** ein Fahrtrichtungswunsch des Fahrers bereitgestellt wird, und dass ein Objekt (18) gekennzeichnet wird (S4), wenn mit Hilfe des Fahrtrichtungswunsches ermittelt wird, dass von dem Objekt (18) keine Kollisionsgefahr für das Kraftfahrzeug (10) ausgeht.

3. Verfahren nach Anspruch 1 oder 2, **dadurch gekennzeichnet, dass** eine Kollisionsgefahr dann signalisiert wird (S8), wenn ein nicht gekennzeichnetes Objekt (18) aufgrund seiner Position und seiner zu dem Kraftfahrzeug (10) relativen Bewegungsrichtung mit dem Kraftfahrzeug (10) kollidieren würde.

4. Verfahren nach Anspruch 3, **dadurch gekennzeichnet, dass** eine Kollisionsgefahr nur dann signalisiert wird (S8), wenn das nicht gekennzeichnete Objekt (18) aufgrund seiner Bewegungsgeschwindigkeit relativ zu dem Kraftfahrzeug (10) innerhalb einer vorbestimmten Zeit mit dem Kraftfahrzeug kollidieren würde.

5. Verfahren nach einem der Ansprüche 1 bis 4, **dadurch gekennzeichnet, dass** die Fahrzeugkomponente bewegliche Fahrzeugteile, insbesondere Fahrzeugtüren, umfasst.

6. Verfahren nach einem der Ansprüche 2 bis 5, **dadurch gekennzeichnet, dass** ein Objekt (18) gekennzeichnet wird, wenn aufgrund eines Blinkersignals und/oder eines Lenkradwinkels und/oder eines Gierwinkels und/oder einer Fahrstufenauswahl ein Fahrtrichtungswunsch des Fahrers ermittelt werden kann, und wenn sich das Objekt (18) außerhalb eines Bereichs befindet, der vom Kraftfahrzeug (10) in der gewünschten Fahrtrichtung überfahren wird.

7. Verfahren nach einem der Ansprüche 1 bis 6, **dadurch gekennzeichnet, dass** das Bereitstellen (S1, S5) einer Positions- und Bewegungsrichtungsangabe mindestens eines im Umgebungsbereich (14) befindlichen Objekts (18) während des Stillstands des Kraftfahrzeugs (10) durchgeführt wird.

8. Verfahren nach einem der Ansprüche 1 bis 6, **dadurch gekennzeichnet, dass** das Bereitstellen (S1, S5) einer Positions- und Bewegungsrichtungsangabe mindestens eines im Umgebungsbereich (14) befindlichen Objekts (18) während der Fahrt des Kraftfahrzeugs (10) durchgeführt wird.

9. Verfahren nach einem der Ansprüche 1 bis 8, **dadurch gekennzeichnet, dass** beim Signalisieren (S8) einer Kollisionsgefahr ein Warnsignal an den Fahrer ausgegeben wird (S8).

10. Vorrichtung zur Kollisionsüberwachung für ein Kraftfahrzeug (10), umfassend:
- wenigstens einen Objektsensor (12) zur Überwachung eines Umgebungsbereichs (14);
- eine Steuereinheit (16), welche ausgebildet ist, um:
- eine Positions- und Bewegungsrichtungsangabe mindestens eines im Umgebungsbereich (14) befindlichen Objekts (18) bereitzustellen (S1, S5); dann
- einer Fahrzeuginformation, welche mindestens eine Position einer Fahrzeugkomponente angibt, bereitzustellen (S2); dann
- ein Objekt (18) zu kennzeichnen (S4), falls aufgrund der Fahrzeuginformation ermittelt wird, dass es sich bei dem Objekt (18) um eine Fahrzeugkomponente handelt, welche sich im Umgebungsbereich (14) befindet; und dann
- eine Signalisierungseinrichtung zum Signalisieren (S8) einer Kollisionsgefahr, wenn aufgrund der Positions- und Bewegungsrichtungsangabe die Annäherung eines nicht gekennzeichneten Objekts (18) an das Kraftfahrzeug (10) erkannt wird.

11. Computerprogramm, das, wenn es auf einer Datenverarbeitungsvorrichtung ausgeführt wird, das Verfahren nach einem der Ansprüche 1 bis 9 durchführt.

## Claims

1. Collision monitoring method for a motor vehicle (10), wherein a predefined surrounding region (14) is monitored, comprising:
- making available (S1, S5) a position indication and direction of movement indication of at least one object (18) located in the surrounding region (14); then
- making available (S2) vehicle information which indicates at least one position of a vehicle component; then
- characterizing (S4) an object (18) if it is determined using the vehicle information that the object (18) is a vehicle component which is located in the surrounding region (14); and then
- signalling (S8) a risk of a collision if the approaching of a non-characterized object (18) to the motor vehicle (10) is detected on the basis of the position indication and direction of movement indication.

2. Method according to Claim 1, **characterized in that** a travel direction request by the driver is made available, and **in that** an object (18) is characterized (S4) if it is determined using the travel direction request that there is no risk of a collision for the motor vehicle (10) originating from the object (18).

3. Method according to Claim 1 or 2, **characterized in that** a risk of a collision is signalled (S8) if a non-characterized object (18) would collide with the motor vehicle (10) on the basis of the position of said object (18) and the direction of movement of said object (18) relative to the motor vehicle (10).

4. Method according to Claim 3, **characterized in that** a risk of a collision is signalled (S8) only when on the basis of its movement speed relative to the motor vehicle (10) the non-characterized object (18) would collide with the motor vehicle within a predetermined time.

5. Method according to one of Claims 1 to 4, **characterized in that** the vehicle component comprises movable vehicle parts, in particular vehicle doors.

6. Method according to one of Claims 2 to 5, **characterized in that** an object (18) is characterized if a travel direction request of the driver can be determined on the basis of a flashing indicator light signal and/or a steering wheel angle and/or a yaw angle and/or a driving stage selection and if the object (18) is located outside a region which is travelled through by the motor vehicle (10) in the desired travel direction.

7. Method according to one of Claims 1 to 6, **characterized in that** a position indication and direction of movement indication of at least one object (18) which is located in the surrounding region (14) is made available (S1, S5) during the stationary state of the motor vehicle (10).

8. Method according to one of Claims 1 to 6, **characterized in that** a position indication and direction of movement indication of at least one object (18) which is located in the surrounding region (14) is made available (S1, S5) while the motor vehicle (10) is travelling.

9. Method according to one of Claims 1 to 8, **characterized in that** a warning signal is output (S8) to the driver during the signalling (S8) of a risk of a collision.

10. Collision monitoring device for a motor vehicle (10), comprising:
- at least one object sensor (12) for monitoring a surrounding region (14);
- a control unit (16) which is designed:
- to make available (S1, S5) a position indication and direction of movement indication of at least one object (18) which is located in the surrounding region (14); then
- to make available (S2) vehicle information that indicates at least one position of a vehicle component; then
- to characterize (S4) an object (18) if it is determined on the basis of the vehicle information that the object (18) is a vehicle component which is located in the surrounding region (14); and
- a signalling device for signalling (S8) a risk of a collision if the approaching of a non-characterized object (18) to the motor vehicle (10) is detected on the basis of the position indication and direction of movement indication.

11. Computer program which, when executed on a data processing device, carries out the method according to one of Claims 1 to 9.

## Revendications

1. Procédé de surveillance de collision pour un véhicule automobile (10), une zone d'environnement (14) prédéfinie étant surveillée, comprenant :
- la mise à disposition (S1, S5) d'une indication de position et de direction de déplacement d'au moins un objet (18) se trouvant dans la zone d'environnement (14) ; puis
- la mise à disposition (S2) d'une information de véhicule indiquant l'au moins une position d'un composant de véhicule ; puis
- la caractérisation (S4) d'un objet (18) si l'on détermine à l'aide de l'information de véhicule que l'objet (18) est un composant de véhicule se trouvant dans la zone d'environnement (14) ; et puis
- le signalement (S8) d'un risque de collision lorsque l'approche d'un objet (18) non caractérisé est reconnue au niveau du véhicule automobile (10) sur la base de l'indication de position et de direction de déplacement.

2. Procédé selon la revendication 1, **caractérisé en ce qu'**un souhait de direction de conduite du conducteur est mis à disposition et qu'un objet (18) est caractérisé (S4) lorsque l'on détermine à l'aide du souhait de direction de conduite qu'aucun risque de collision n'existe avec l'objet (18) pour le véhicule automobile (10).

3. Procédé selon la revendication 1 ou 2, **caractérisé en ce qu'**un risque de collision est signalé (S8) lorsqu'un objet (18) non caractérisé pourrait entrer en collision avec le véhicule automobile (10) sur la base de sa position et de sa direction de déplacement relative au véhicule automobile (10).

4. Procédé selon la revendication 3, **caractérisé en ce qu'**un risque de collision n'est signalé (S8) que lorsque l'objet (18) non caractérisé pourraient entrer en collision avec le véhicule automobile pendant une durée prédéterminée sur la base de sa vitesse de déplacement par rapport au véhicule automobile (10).

5. Procédé selon l'une quelconque des revendications 1 à 4, **caractérisé en ce que** le composant de véhicule comprend des pièces de véhicule, notamment des portes de véhicule.

6. Procédé selon l'une quelconque des revendications 2 à 5, **caractérisé en ce qu'**un objet (18) est caractérisé lorsqu'un souhait de direction de conduite du conducteur peut être calculé sur la base d'un signal de clignotant et/ou d'un angle de volant de direction et/ou d'un angle de braquage et/ou d'une sélection d'étage de conduite et lorsque l'objet (18) se trouve à l'extérieur d'une zone sur laquelle le véhicule automobile (10) va passer dans la direction de conduite souhaitée.

7. Procédé selon l'une quelconque des revendications 1 à 6, **caractérisé en ce que** la mise à disposition (S1, S5) d'une indication de position et de direction de déplacement d'au moins un objet (18) se trouvant dans la zone d'environnement (14) est réalisée pendant l'arrêt du véhicule automobile (10).

8. Procédé selon l'une quelconque des revendications 1 à 6, **caractérisé en ce que** la mise à disposition (S1, S5) d'une indication de position et de direction de déplacement d'au moins un objet (18) se trouvant dans la zone d'environnement (14) est réalisée pendant la conduite du véhicule automobile (10).

9. Procédé selon l'une quelconque des revendications 1 à 8, **caractérisé en ce qu'**en cas de signalement (S8) d'un risque de collision, un signal d'avertissement est envoyé au conducteur (S8).

10. Dispositif de surveillance de collision pour un véhicule automobile (10), comprenant :
- au moins un détecteur d'objet (12) servant à la surveillance d'une zone d'environnement (14) ;
- une unité de commande (16) réalisée pour :
- mettre à disposition (S1, S5) une indication de position et de direction de déplacement d'au moins un objet (18) se trouvant dans la zone d'environnement (14) ; puis
- mettre à disposition (S2) une information de véhicule indiquant au moins une position d'un composant de véhicule ; puis
- caractériser (S4) un objet (18) si l'on calcule sur la base de l'information de véhicule que l'objet (18) détecté est un composant de véhicule se trouvant dans la zone d'environnement (14) ; et
- un dispositif de signalement servant à signaler (S8) un risque de collision lorsque l'approche d'un objet non caractérisé (18) est reconnue au niveau du véhicule automobile (10) sur la base de l'indication de position et de direction de déplacement.

11. Programme informatique qui, lorsqu'il est exécuté sur un dispositif de traitement de données, réalise le procédé selon l'une quelconque des revendications 1 à 9.
